# EUROPÄISCHE PATENTSCHRIFT

(11) **EP 1 966 013 B1**
(45) Veröffentlichungstag und Bekanntmachung des Hinweises auf die Patenterteilung: **23.02.2011**
(21) Anmeldenummer: 06807687.6
(22) Anmeldetag: 31.10.2006
(51) Int. Cl.: B60S 1/40

(54) **ANSCHLUSSELEMENT**
CONNECTION ELEMENT
ELEMENT DE RACCORDEMENT

(30) Priorität: 19.12.2005 DE 102005060664
(43) Veröffentlichungstag der Anmeldung: 10.09.2008
(73) Patentinhaber: ROBERT BOSCH GMBH, 70442 Stuttgart (DE)
(72) Erfinder: MERKEL, Wilfried, 77876 Kappelrodeck (DE); CRABBÉ, Ruddy, B-3350 Linter (Neerkespen) (BE); CRIEL, Paul, B-3800 St. Truiden (BE); DE BLOCK, Peter, B-3545 Halen (BE); WINDMOLDERS, Eric, B-3510 Kermt (BE); VAN BAELEN, David, B-3020 Herent (BE); HAEFELE, Klaus-Dieter, 76534 Neuweier (DE); FATAN, Bart, B-3510 Kermt (BE)
(86) Internationale Anmeldenummer: PCT/EP2006/067969
(87) Internationale Veröffentlichungsnummer: WO 2007/071487

(56) Entgegenhaltungen:
- EP-A1- 1 437 273
- DE-A1- 19 835 065
- DE-A1-102004 017 941
- DE-A1-102004 019 157
- DE-U1-202005 012 619
- FR-A- 2 854 852

## Beschreibung

### Stand der Technik

Die Erfindung geht von einem Anschlusselement nach dem Oberbegriff des Anspruchs 1 aus.

Aus der DE 198 35 065 A1 ist ein Wischblatt bekannt, bei dem in einem zentralen Längskanal einer Kopfleiste eine Federschiene als Tragelement eingelegt ist. Auf der Kopfleiste sitzt ein Anschlusselement mit einem Gelenkbolzen, um das Wischblatt mit einem Wischarm gelenkig verbinden zu können. Das Anschlusselement liegt mit einem Bodenteil an der Kopfleiste des Wischgummis an und wird durch vier Klauen gehalten, die an gegenüberliegenden Längsseiten des Bodenteils angeformt sind und die Kopfleiste mit der Federschiene seitlich und von unten umfassen. Die Klauen werden bei der Montage um die Kopfleiste gebogen und zusammengepresst, sodass sich eine kraftschlüssige Verbindung zwischen dem Anschlusselement und der Kopfleiste ergibt.

Aus der DE 10 2004 019 157 A1 ist ein Wischblatt mit zwei Federschienen als Tragelemente bekannt, die in seitliche Längsnuten des Wischgummis eingelegt sind. Eine Blechkralle, die einen mittleren Steg mit einer Lagerbohrung aufweist, umfasst mit zwei durchgehenden, auf gegenüberliegenden Längsseiten angeordneten Krallen die aus den Längsnuten vorstehenden Teile der Federschienen. Die Krallen, die an einem Bodenteil des Anschlusselements angeformt sind, werden bei der Montage um die Federschienen gebogen und fest zusammengepresst. Um die Reibung zwischen den Federelementen und den Krallen zu erhöhen, ist zwischen den Krallenfüßen einerseits und den Federschienen andererseits eine Zwischenlage aus Kunststoff vorgesehen. Bei anderen Ausführungsbeispielen ist durch verschiedene Gestaltungen der Federschienen Vorsorge getroffen, dass sich das Anschlusselement nicht in Längsrichtung des Wischblatts verschieben kann.

### Vorteile der Erfindung

Nach der Erfindung weist das Anschlusselement Mittel auf, durch die die Flächenpressung zwischen dem Bodenteil und dem Wischgummi örtlich erhöht wird. Durch die örtliche Erhöhung der Flächenpressung im Bereich des Bodenteils erreicht man einen sicheren Sitz des Anschlusselements auf dem Wischblatt, der sich auch nach einer längeren Betriebsdauer nicht löst. Somit ist stets eine sichere Position des Anschlusselements in Längsrichtung des Wischblatts gegeben, was für die Wischeigenschaften und dem Schwingungsverhalten des Wischblatts von Bedeutung ist. Ein sicherer Sitz des Anschlusselements ist insbesondere dann nicht gewährleistet, wenn sich Krallen unmittelbar an den Federschienen abstützen. In diesen Fällen ist es besonders vorteilhaft, wenn durch eine größere Flächenpressung zwischen dem Bodenteil und dem angrenzenden Wischgummi die Längsfixierung des Anschlusselements verbessert wird.

Aber auch bei Wischblättern mit einer zentralen Federschiene ist es vorteilhaft, die Flächenpressung im Bereich des Bodenteils örtlich zu erhöhen. Zwar drücken sich die Krallenfüße stark in den unteren Bereich der Kopfleiste des Wischgummis ein, um jedoch auf der Seite des Bodenteils eine adäquate Flächenpressung zu erzeugen, müsste der Druck der Krallen so stark erhöht werden, dass eine Beschädigung des Wischgummis zu befürchten ist. Durch die örtliche Erhöhung der Flächenpressung im Bereich des Bodenteils verteilen sich die Fixierkräfte auf mehrere Angriffspunkte des Wischgummis, sodass eine Überbeanspruchung an einer Stelle nicht zu befürchten ist.

Gemäß einer Ausgestaltung der Erfindung wird vorgeschlagen, dass in Seitenwänden quer zur Längsrichtung des Anschlusselements ein Klemmteil mit einem Nocken und einem Hebel schwenkbar gelagert ist. Der Nocken kann mittels des Hebels in eine Arretierstellung verstellt werden, in der er durch ein Fenster im Bodenteil auf den Wischgummi drückt. In dieser Stellung wird der Hebel fixiert. Durch die Höhe des Nockens kann die Flächenpressung in diesem Bereich modifiziert werden. Zur Arretierung des Hebels besitzt dieser an seiner freien Stirnseite eine Aussparung, in der mindestens ein Rastvorsprung vorgesehen ist. Dieser wirkt mit einer Kerbe an einer Lasche zusammen, die an dem Bodenteil angeformt ist. Selbstverständlich kann die Wirkungsweise auch umgekehrt werden, sodass die Kerbe an dem Hebel und der Rastvorsprung an der Lasche angeordnet sind.

Bei einer weiteren Ausgestaltung der Erfindung ist das Anschlusselement ein Druckguss- oder Spritzgussteil, das an beiden Längsseiten jeweils eine durchgehende Kralle besitzt. Durch die längeren Krallen kann die örtliche Flächenpressung im Bereich der Krallen der örtlichen Flächenpressung im Bereich des Bodenteils angepasst werden.

Gemäß einer weiteren Ausgestaltung der Erfindung bildet das Bodenteil an seinen Enden Brücken, an denen die Krallen angeformt sind. Zwischen den Brücken und dem Wischgummi sind Klemmstücke angeordnet, die durch Keile gegen den Wischgummi gepresst werden. Durch die Form der Klemmstücke und Keile kann die Höhe der örtlichen Flächenpressung modifiziert werden. Zweckmäßigerweise werden die Keile in ihrer Endposition fixiert, damit sie sich nicht während des Betriebs lösen können. Hierzu weisen die Keile Klinken auf, die in ihrer Endposition in Rastlöcher in den Brücken eingreifen. Durch Zurückdrücken der Klinken können die Keile und Klemmstücke demontiert werden und damit ebenfalls das Anschlusselement.

Eine besonders einfache Ausführungsform ergibt sich, wenn das Bodenteil zwischen seinen Enden zum Wischgummi hin gebogen ist, sodass im mittleren Bereich des Anschlusselements eine verstärkte Flächenpressung auf den Wischgummi entsteht, wenn bei der Montage die Krallen um das Tragelement bzw. die Tragelemente umgebogen werden. Die Größe und Höhe der Krümmung. bestimmt weitgehend die Höhe der örtlichen Flächenpressung. So kann es ausreichen, dass das Bodenteil im Bereich einer Gelenkachse eine quer zur Längsrichtung verlaufende Sicke aufweist, die in montierter Position in den Wischgummi eingedrückt ist.

Nach einer weiteren Ausgestaltung kann das Bodenteil an seinen Enden Klauen aufweisen, die bei einer Montage in Richtung auf den Wischgummi gebogen werden und mit ihren Haken in den Wischgummi eingreifen. Durch die Länge und Form der Haken kann die örtliche Flächenpressung so modifiziert werden, dass ein optimaler Kompromiss zwischen der Haltekraft und der Beanspruchung des Wischgummis erreicht wird. Die Klauen können in Längsrichtung an den Enden des Bodenteils angeformt oder in den Endbereichen im Bodenteil ausgeklinkt sein. Beide Möglichkeiten ergeben nur geringe Mehrkosten bei der Fertigung des Anschlusselements.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische, perspektivische Darstellung eines Anschlusselements auf einem Wischblatt schräg von o- ben,
- Fig. 2: eine Seitenansicht eines Anschlusselements nach Fig. 1,
- Fig. 3: und Fig. 4 Varianten zu Fig. 1,

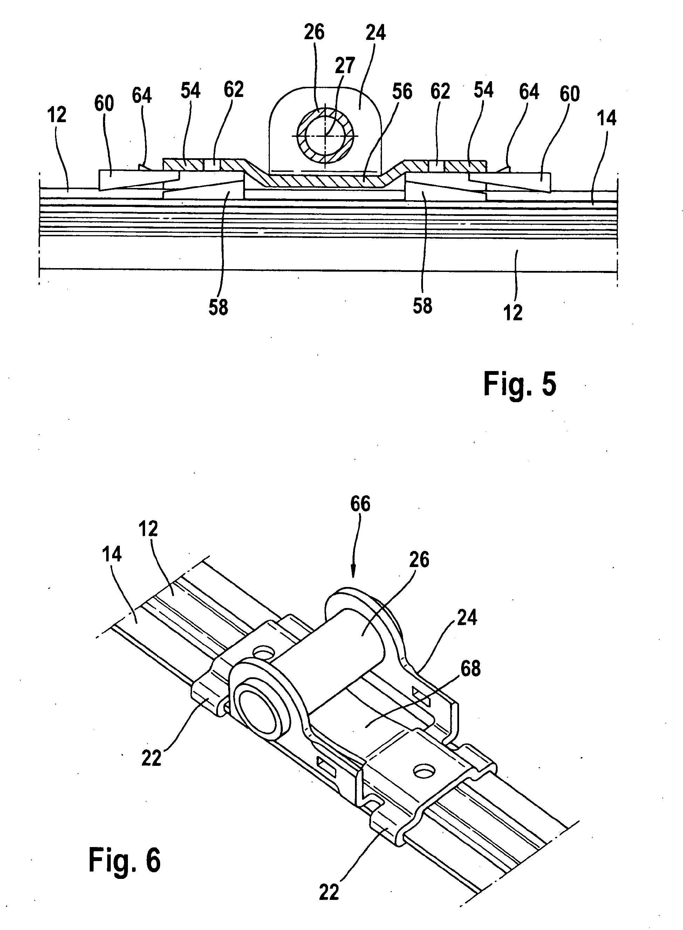

- Fig. 5: einen Längsschnitt durch ein Anschlusselement nach Fig. 4,
- Fig. 6: eine weitere Variante zu Fig. 1,
- Fig. 7: eine Seitenansicht eines Anschlusselements nach Fig. 6
- Fig. 8: eine Variante zu Fig. 7,
- Fig. 9: eine weitere Variante zu Fig. 1,
- Fig. 10: eine Seitenansicht zu Fig. 1 und
- Fig. 11: eine Variante zu Fig. 9.

### Beschreibung der Ausführungsbeispiele

Ein Wischblatt 10 mit einem Wischgummi 12 besitzt zwei Federschienen 14, die als Tragelemente dienen und in seitliche Längsnuten des Wischgummis 12 eingelegt sind. Auf dem Wischblatt 10 ist ein Anschlusselement 16 montiert, das ein Bodenteil 18 und daran angeformte Seitenwände 24 besitzt. An dem Bodenteil 18 sind an den Längsseiten Krallen 22 angeformt, die die Federschienen 14 an den aus dem Wischgummi 12 hervorragenden Teilen umfassen.

Die Seitenwände 24 sind durch eine Gelenknabe 26 miteinander verbunden, die mit einem nicht dargestellten Gelenkbolzen des Wischarms ein Gelenk mit einer Gelenkachse 27 bildet. Grundsätzlich kann die Wirkungsweise der Gelenknabe 26 und Gelenkbolzens umgekehrt werden, sodass die Seitenwände 24 durch einen Gelenkbolzen miteinander verbunden sind und eine Gelenknabe 26 an dem Wischarm vorgesehen wird.

Parallel zur Gelenknabe 26 ist ein Klemmteil 28 über Lagerzapfen 30 in den Seitenteilen 24 schwenkbar gelagert. Das Klemmteil 28 umfasst einen Nocken 32 und einen Hebel 34. Die Erhebung des Nockens 32 erstreckt sich etwa senkrecht zum Hebel 34. Durch Schwenken des Hebels 34 bewegt sich der Nocken 32 durch ein Fenster 20 in dem Bodenteil 18 gegen den Wischgummi 12 und wird in diesen eingedrückt. Die Höhe und Form des Nockens 32 ergibt die örtlich erhöhte Flächenpressung gegenüber dem Wischgummi 12. In der Endposition des Hebels 34 wird dieser fixiert. Hierzu besitzt er an seiner freien Stirnfläche eine Aussparung 36, in der zwei einander gegenüberliegende Rastvorsprünge 38 angeordnet sind. Diese wirken mit Kerben 40 zusammen, die an einer Lasche 42 angeordnet sind. Die Lasche 42 ist in Verlängerung des Bodenteils 18 an diesem angeformt und in Richtung der Seitenwände 24 abgewinkelt.

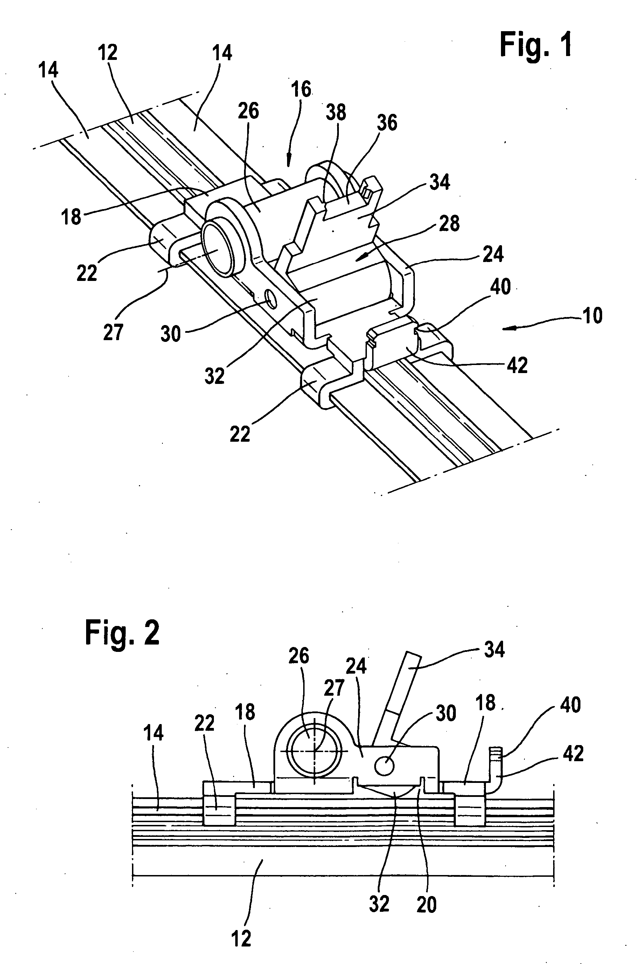

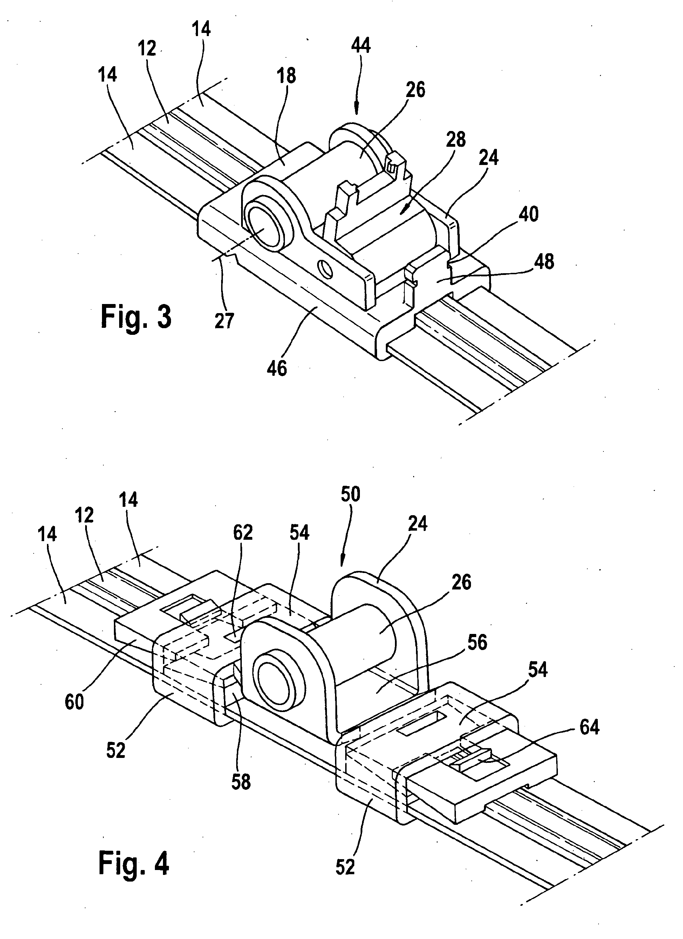

Das Anschlusselement 44 nach Fig. 3 unterscheidet sich von dem Anschlusselement 16 nach Fig. 1 und Fig. 2 dadurch, dass es aus Druckguss oder Spritzguss hergestellt ist, und dass es auf beiden Längsseiten durchgehende Krallen 46 aufweist. Das Anschlusselement 44 wird in Längsrichtung auf das Wischblatt 10 geschoben und über das Klemmteil 28 fixiert. Die Seitenwände 24 und die Lasche 48 sowie der Bodenteil 18 und die Krallen 46 sind in einem einzigen Fertigungsprozess hergestellt.

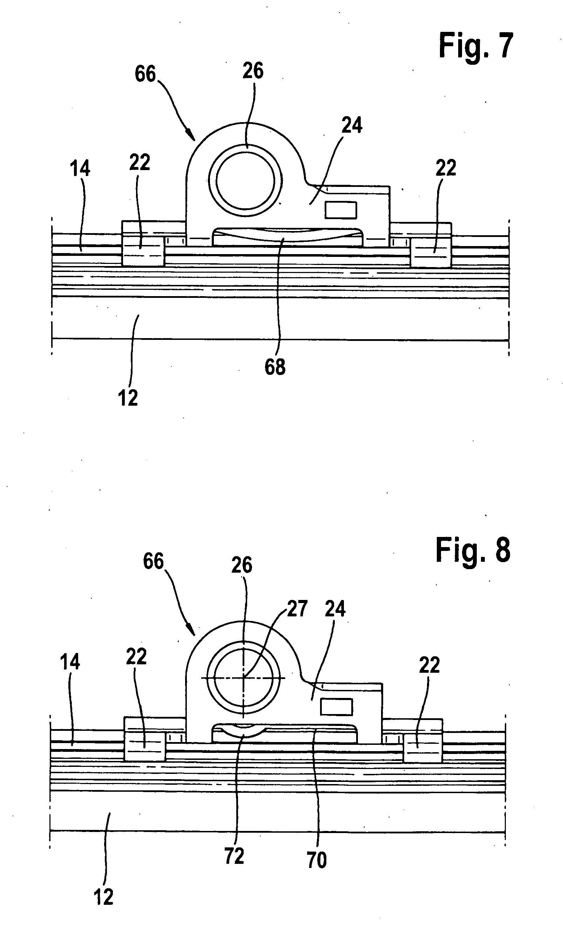

Das Anschlusselement 50 nach Fig. 4 hat ein Bodenteil 56, das an seinen Enden als Brücken 54 ausgebildet ist, an denen Krallen 52 angeformt sind. Zwischen den Brücken 54 und den Tragelementen 14 bzw. dem Wischgummi 12 sind Klemmstücke 58 vorgesehen, die mit Keilen 60 zusammenwirken. Diese stützen sich an der Innenseite der Brücken 54 ab und drücken die Klemmstücke 58 gegen den Wischgummi 12, wodurch eine örtliche höhere Flächenpressung entsteht. Die Keile 60 werden in Längsrichtung durch Klinken 64 fixiert, die in der Endstellung der Keile 60 in Rastlöcher 62 der Brücken 54 einrasten. Durch die Gestaltung der Klemmstücke 58 und der Keile 60 kann der Anpressdruck gegen den Wischgummi 12 variiert werden. Das Anschlusselement 66 nach Fig. 7 besitzt ein Bodenteil 68, das zwischen seinen Enden zum Wischgummi 12 hin gebogen ist. Die Größe des Biegeradius und die Höhe der Biegung bestimmen die Größe der örtlichen Flächenpressung. Werden die Krallen 22 bei der Montage um die Federschienen 14 gebogen und zusammengepresst, drückt sich der gebogene Teil des Bodenteils 68 in den Wischgummi 12 ein. Bei der Varianten nach Fig. 8 besitzt der Bodenteil 70 eine quer zum Wischblatt 10 verlaufende Sicke 72 im Bereich der Gelenkachse 27. Im Vergleich zur Ausführung nach Fig. 7 konzentrieren sich die Anpresskräfte , bei der Ausführung nach Fig. 8 auf den schmaleren Bereich der Sicke 72.

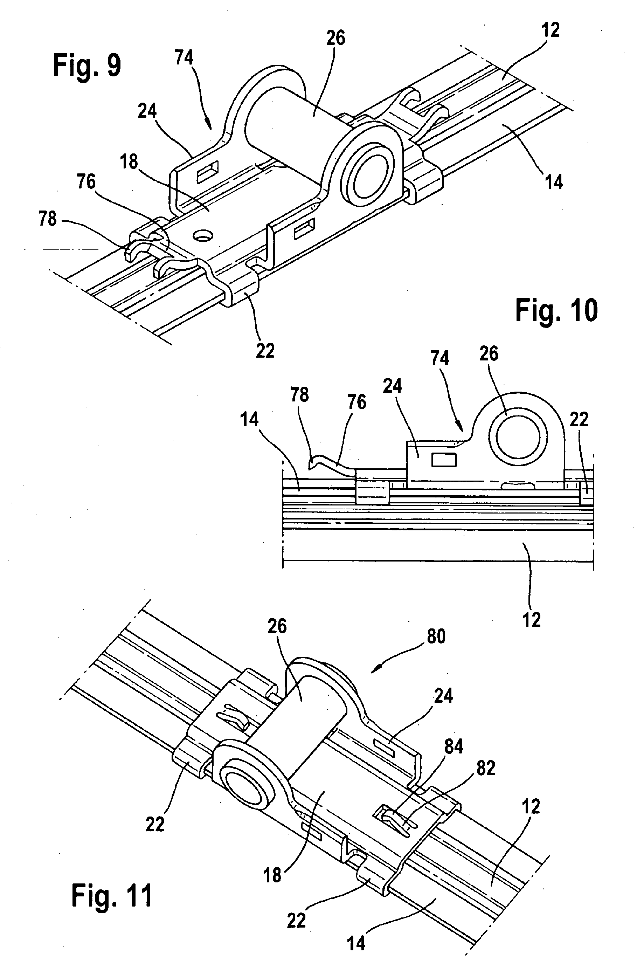

Die Anschlusselemente 74 und 80 nach Fig. 9 bis Fig. 11 besitzen an dem Bodenteil 18 angeformte Klauen 76, 82. Diese sind vor der Montage leicht abgewinkelt, sodass sich die Anschlusselemente 74, 80 in Längsrichtung über das Wischblatt 10 schieben lassen. In der endgültigen Position der Anschlusselemente 74', 80 werden die Klauen 76, 82 gegen den Wischgummi 12 gedrückt, wobei ihre Haken 78, 84 in den Wischgummi 12 eingreifen und die Anschlusselemente 74, 80 in Längsrichtung fixieren. Das Anschlusselement 74 unterscheidet sich von dem Anschlusselement 80 dadurch, dass die Klauen 76 ausgehend von den Stirnseiten des Bodenteils 18 nach außen weisen und jeweils zwei parallel angeordnete Haken 78 besitzen, während das Anschlusselement 80 an jedem Ende eine Klaue 82 mit jeweils einem Haken 84 besitzt, die aus dem Bodenteil 18 ausgeklinkt sind und zur Gelenknabe 26 weisen. Durch die Länge und Gestaltung der Haken 78, 84 kann die örtliche Flächenpressung zum Wischgummi 12 hin modifiziert werden und die Haltekraft den Erfordernissen angepasst werden.

## Patentansprüche

1. Anschlusselement (16, 44, 50, 66, 74, 80) zum gelenkigen Verbinden eines Wischblatts (10), das als Tragelement mindestens eine Federschiene (14) besitzt, mit einem Wischarm, wobei das Anschlusselement (16, 44, 50, 66, 74, 80) Krallen (22, 46, 52) aufweist, die seitlich an einem Bodenteil (18) angeformt sind und im montierten Zustand die Federschiene (14) umfassen und halten, indem sich der Bodenteil (18) an einem Teil eines Wischgummis (12) abstützt, das zwischen der Federschiene (14) und dem Bodenteil (18, 56, 68, 70) angeordnet ist, **dadurch gekennzeichnet, dass** das Anschlusselement (16, 44, 50, 66, 74, 80) zusätzliche Mittel (28, 58, 60, 68, 72, 76, 78, 82, 84) aufweist, durch die die Flächenpressung zwischen dem Bodenteil (18, 56, 68, 70) und dem Wischgummi (12) örtlich erhöht wird.

2. Anschlusselement (16) nach Anspruch 1, **dadurch gekennzeichnet, dass** in Seitenwänden (24) quer zur Längsrichtung des Anschlusselements (16) ein Klemmteil (28) mit einem Nocken (32) und einem Hebel (34) schwenkbar gelagert ist, wobei der Nocken (32) mittels des Hebels (34) in eine Arretierstellung verstellt werden kann, in der er durch ein Fenster (20) in dem Bodenteil (18) auf den Wischgummi (12) drückt, und der Hebel (34) in dieser Stellung fixiert ist.

3. Anschlusselement (16) nach Anspruch 2, **dadurch gekennzeichnet, dass** der Hebel (34) an seiner freien Stirnseite eine Aussparung (36) besitzt, in der mindestens ein Rastvorsprung (38) oder eine Kerbe (40) vorgesehen ist, wobei der Rastvorsprung (38) mit mindestens einer Kerbe (40) bzw. die Kerbe (40) mit einem Rastvorsprung (38) an einer Lasche (42) zusammenwirkt, die an dem Bodenteil (18) angeformt ist.

4. Anschlusselement (44) nach einem der vorhergehenden Ansprüche, **dadurch gekennzeichnet, dass** es ein Druckguss- oder Spritzgussteil ist.

5. Anschlusselement (44) nach Anspruch 3 oder 4, dass es an beiden Längsseiten jeweils eine durchgehende Kralle (46) besitzt.

6. Anschlusselement (50) nach Anspruch 1, **dadurch gekennzeichnet, dass** das Bodenteil (56) an seinen Enden Brücken (54) bildet, an denen die Krallen (52) angeformt sind, wobei zwischen den Brücken (54) und dem Wischgummi (12) Klemmstücke (58) angeordnet sind, die durch Keile (60) gegen den Wischgummi (12) gepresst werden.

7. Anschlusselement (50) nach Anspruch 6, **dadurch gekennzeichnet, dass** die Keile (60) Klinken (64) aufweisen, die in ihrer Endposition in Rastlöcher (62) in den Brücken (54) eingreifen.

8. Anschlusselement (66) nach Anspruch 1, **dadurch gekennzeichnet, dass** das Bodenteil (68) zwischen seinen Enden zum Wischgummi (12) hin gebogen ist, sodass im mittleren Bereich des Anschlusselements (66) eine verstärkte Flächenerpressung auf den Wischgummi (12) entsteht.

9. Anschlusselement (66) nach Anspruch 8, **dadurch gekennzeichnet, dass** das Bodenteil (70) im Bereich einer Gelenkachse (27) eine quer zur Längsrichtung verlaufende Sicke (72) aufweist, die in montierter Position in den Wischgummi (12) eingedrückt ist.

10. Anschlusselement (74) nach Anspruch 1, **dadurch gekennzeichnet, dass** das Bodenteil (18) an seinen Enden nach außen weisende Klauen (76) aufweist, die bei einer Montage in Richtung auf den Wischgummi (12) gebogen werden und mit ihren Haken (78) in den Wischgummi (12) eingreifen.

11. Anschlusselement (80) nach Anspruch 1, **dadurch gekennzeichnet, dass** in seinen Endbereichen im Bodenteil (18) Klauen (82) ausgeklinkt sind, die bei der Montage gegen den Wischgummi (12) gedrückt werden, sodass ihre Haken (84) in den Wischgummi (12) eingreifen.

## Claims

1. Connection element (16, 44, 50, 66, 74, 80) for the articulated connection of a wiper blade (10), which has at least one spring rail (14) as supporting element, to a wiper arm, wherein the connection element (16, 44, 50, 66, 74, 80) has claws (22, 46, 52) which are integrally formed laterally on a base part (18) and, in the fitted state, surround and hold the spring rail (14) by the base part (18) being supported on a part of a wiper blade rubber (12) arranged between the spring rail (14) and the base part (18, 56, 68, 70), **characterized in that** the connection element (16, 44, 50, 66, 74, 80) has additional means (28, 58, 60, 68, 72, 76, 78, 82, 84), by means of which the surface pressure between the base part (18, 56, 68, 70) and the wiper blade rubber (12) is locally increased.

2. Connection element (16) according to Claim 1, **characterized in that** a clamping part (28) with a cam (32) and a lever (34) is mounted pivotably in side walls (24) transversely the connection element (16), it being possible for the cam (32) to be adjusted by means of the lever (34) into a locking position in which it presses through an aperture (20) in the base part (18) onto the wiper blade rubber (12), and the lever (34) is fixed in this position.

3. Connection element (16) according to Claim 2, **characterized in that** the free end side of the lever (34) has a recess (36) in which at least one latching projection (38) or a notch (40) is provided, the latching projection (38) interacting with at least one notch (40) or the notch (40) interacting with a latching projection (38) on a tab (42) which is integrally formed on the base part (18).

4. Connection element (44) according to one of the preceding claims, **characterized in that** it is a diecast part or an injection-moulded part.

5. Connection element (44) according to Claim 3 or 4, **characterized in that** it has a respective continuous claw (46) on both longitudinal sides.

6. Connection element (50) according to Claim 1, **characterized in that** the ends of the base part (56) form bridges (54) on which the claws (52) are integrally formed, with clamping pieces (58) being arranged between the bridges (54) and the wiper blade rubber (12) and being pressed against the wiper blade rubber (12) by means of wedges (60).

7. Connection element (50) according to Claim 6, **characterized in that** the wedges (60) have latches (64) which, in the end position thereof, engage in latching holes (62) in the bridges (54).

8. Connection element (66) according to Claim 1, **characterized in that** the base part (68) is curved between the ends thereof towards the wiper blade rubber (12) such that an increased surface pressure is produced on the wiper blade rubber (12) in the central region of the connection element (66).

9. Connection element (66) according to Claim 8, **characterized in that** the base part (70) has, in the region of an axis of articulation (27), a bead (72) which runs transversely with respect to the longitudinal direction and, in the fitted position, is pressed into the wiper blade rubber (12).

10. Connection element (74) according to Claim 1, **characterized in that** the ends of the base part (18) have outwardly pointing catches (76) which, upon installation, are bent in the direction of the wiper blade rubber (12) and engage with their hooks (78) in the wiper blade rubber (12).

11. Connection element (80) according to Claim 1, **characterized in that**, in the end regions thereof, catches (82) are unlatched in the base part (18) and, upon installation, are pressed against the wiper blade rubber (12) such that their hooks (84) engage in the wiper blade rubber (12).

## Revendications

1. Elément de raccordement (16, 44, 50, 66, 74, 80) pour la connexion articulée d'un balai d'essuie-glace (10) qui possède en tant qu'élément porteur au moins un rail élastique (14), avec un bras d'essuie-glace, l'élément de raccordement (16, 44, 50, 66, 74, 80) présentant des griffes (22, 46, 52) qui sont façonnées latéralement sur une partie de fond (18) et qui, dans l'état monté, entourent et retiennent le rail élastique (14), en ce que la partie de fond (18) s'appuie contre une partie d'une raclette d'essuie-glace (12), qui est disposée entre le rail élastique (14) et la partie de fond (18, 56, 68, 70), **caractérisé en ce que** l'élément de raccordement (16, 44, 50, 66, 74, 80) présente des moyens supplémentaires (28, 58, 60, 68, 72, 76, 78, 82, 84), qui permettent d'augmenter localement la pression superficielle entre la partie de fond (18, 56, 68, 70) et la raclette d'essuie-glace (12).

2. Elément de raccordement (16) selon la revendication 1, **caractérisé en ce qu'**une partie de serrage (28) avec un came (32) et un levier (34) est montée de manière pivotante dans des parois latérales (24) transversalement à la direction longitudinale de l'élément de raccordement (16), la came (32) pouvant être déplacée au moyen du levier (34) dans une position de blocage dans laquelle elle presse à travers une fenêtre (20) dans la partie de fond (18) contre la raclette d'essuie-glace (12), et le levier (34) est fixé dans cette position.

3. Elément de raccordement (16) selon la revendication 2, **caractérisé en ce que** le levier (34) possède, sur son côté frontal libre, un évidement (36) dans lequel est prévue au moins une saillie d'encliquetage (38) ou une encoche (40), la saillie d'encliquetage (38) coopérant avec au moins une encoche (40) ou l'encoche (40) coopérant avec une saillie d'encliquetage (38) sur une patte (42) qui est façonnée sur la partie de fond (18).

4. Elément de raccordement (44) selon l'une quelconque des revendications précédentes, **caractérisé en ce qu'**il s'agit d'une pièce moulée sous pression ou d'une pièce moulée par injection.

5. Elément de raccordement (44) selon la revendication 3 ou 4, **caractérisé en ce qu'**il possède, sur les deux côtés longitudinaux, à chaque fois une griffe continue (46).

6. Elément de raccordement (50) selon la revendication 1, **caractérisé en ce que** la partie de fond (56) forme sur ses extrémités des ponts (54) sur lesquels sont façonnées les griffes (52), des pièces de serrage (58) étant disposées entre les ponts (54) et la raclette d'essuie-glace (12), lesquelles sont pressées par des coins (60) contre la raclette d'essuie-glace (12).

7. Elément de raccordement (50) selon la revendication 6, **caractérisé en ce que** les coins (60) présentent des cliquets (64) qui s'engagent dans leur position d'extrémité dans des trous d'encliquetage (62) dans les ponts (54).

8. Elément de raccordement (66) selon la revendication 1, **caractérisé en ce que** la partie de fond (68) est cintrée entre ses extrémités vers la raclette d'essuie-glace (12), de sorte que dans la région centrale de l'élément de raccordement (66) ait lieu un pressage à plat renforcé contre la raclette d'essuie-glace (12).

9. Elément de raccordement (66) selon la revendication 8, **caractérisé en ce que** la partie de fond (70) présente, dans la région d'un axe d'articulation (27), une moulure (72) s'étendant transversalement à la direction longitudinale, qui est enfoncée dans la raclette d'essuie-glace (12) dans la position montée.

10. Elément de raccordement (74) selon la revendication 1, **caractérisé en ce que** la partie de fond (18) présente à ses extrémités des crampons (76) tournés vers l'extérieur, qui, lors du montage, sont cintrés dans la direction de la raclette d'essuie-glace (12) et viennent en prise avec leurs crochets (78) dans la raclette d'essuie-glace (12).

11. Elément de raccordement (80) selon la revendication 1, **caractérisé en ce que** dans ses régions d'extrémité, dans la partie de fond (18), sont entaillés des crampons (82), qui, lors du montage, sont pressés contre la raclette d'essuie-glace (12), de sorte que leurs crochets (84) viennent en prise dans la raclette d'essuie-glace (12).
